# FASCICULE DE BREVET EUROPEEN

(11) **EP 2 000 444 B1**
(45) Date de publication et mention de la délivrance du brevet: **02.03.2011**
(21) Numéro de dépôt: 08356079.7
(22) Date de dépôt: 06.06.2008
(51) Int. Cl.: C04B 22/14, C04B 28/04

(54) **Additif pour composition à base de ciment**
Zuschlagstoff für Verbindung auf Zementbasis
Additive for cement-based composition

(30) Priorité: 08.06.2007 FR 0704128; 11.06.2007 FR 0704151
(43) Date de publication de la demande: 10.12.2008
(73) Titulaire: Lafarge, 75116 Paris (FR)
(72) Inventeur: Sing, Christelle, 38510 Sermerieu (FR); Debegnac, Hélène, 38090 Roche (FR); Faure, Jean-Michel, 69600 Oullins (FR)
(74) Mandataire: Berruet, Laure

(56) Documents cités:
- EP-A- 1 314 706
- EP-A- 1 780 183
- US-A- 2 307 270

## Description

La présente invention concerne un additif pour composition à base de ciment, telle qu'un béton, un mortier ou un ciment, comprenant des particules de sulfate de fer (II) heptahydraté.

Il est bien connu dans le domaine de la cimenterie que la teneur en chrome (VI) soluble doit être aussi réduite que possible. Ainsi, les réglementations courantes (Directive européenne 2003/53/CE) exigent que la concentration du chrome (VI) soluble dans les ciments soit inférieure à 2 ppm.

Une méthode courante d'obtention d'un ciment à teneur réduite en chrome (VI) soluble consiste donc à ajouter au ciment du sulfate de fer - ou sulfate ferreux (FeSO4) -, dans la mesure où les ions Fe²⁺ permettent de réduire les ions Cr⁶⁺.

Le sulfate de fer utilisé est soit heptahydraté (FeSO4,7H2O) soit monohydraté (FeSO4,H2O). Le sulfate de fer heptahydraté est plus soluble dans l'eau que le sulfate de fer monohydraté. Néanmoins il présente généralement des particules plus grossières que le sulfate de fer monohydraté. En outre, la demanderesse a mis en évidence que la forme humide de sulfate de fer (II) heptahydraté (« sel vert ») - nommée « copperas » ou « green vitriol » en langue anglaise - est mal adaptée telle quelle au mélange avec le ciment, dans la mesure où elle peut former des agglomérats rendant sa manipulation et sa solubilisation difficile. Les sulfates de fer heptahydratés secs - dénommés « free flowing heptahydrate ferrous sulfate » en langue anglaise - actuellement disponibles sur le marché présentent tous des tailles granulométriques relativement importantes, avec 70 à 90% en masse du produit constitué de particules de taille granulométrique supérieure à 200 µm. La taille granulométrique de ces particules de sulfate de fer heptahydraté résulte en apparition de tâches dues à une dissolution incomplète des grosses particules de sulfate de fer suivie d'une oxydation (tâche de rouille) sur les parements des matériaux comprenant du ciment. Afin d'éviter ce phénomène, les sulfates de fer grossiers sont habituellement ajoutés en entrée de broyeur dans le cas des broyeurs à circuit ouvert, ou en entrée de séparateur dans le cas des broyeurs à circuit fermé.

Quand le sulfate de fer est ajouté au niveau du broyeur ou en entrée de séparateur, les particules de sulfate de fer sont co-broyées avec les constituants du ciment et se transforment en très petites particules. Ces petites particules de sulfate de fer (II) heptahydraté, du fait d'un grand rapport surface/volume, sont davantage sujettes à l'oxydation ou au vieillissement et perdent ainsi leur efficacité vis-à-vis de la réduction du chrome (VI) au cours du temps.

Pour garantir une teneur en chrome (VI) soluble inférieure à 2 ppm pendant une période de temps suffisante et donc compenser la perte d'efficacité au cours du temps, la quantité de sulfate de fer qui est incorporée dans le ciment est largement supérieure à la quantité de sulfate de fer théoriquement nécessaire pour réduire le chrome (VI) soluble. Actuellement la dose de sulfate ferreux heptahydraté ajouté dans le ciment varie largement, entre 300 et 1000 ppm de sulfate ferreux heptahydraté sec (soit entre 60 et 200 ppm d'ion Fe²⁺) par ppm de Chrome (VI) soluble, ceci en fonction de la durée de conservation du ciment souhaitée (les valeurs mentionnées correspondent à une durée de conservation minimum de deux mois). Ce surdosage génère un surcoût important et un risque concernant une possible modification des propriétés d'usage du ciment ou des matériaux dérivés de celui-ci, tels que des bétons ou des mortiers.

Il existe donc un besoin d'un procédé permettant d'accroître la stabilité du sulfate de fer heptahydraté sec et de diminuer la quantité de sulfate de fer devant être incorporée dans un ciment (par exemple afin de réduire le chrome (VI) soluble contenu dans ce ciment).

C'est pourquoi un des objets de la présente invention consiste en un additif pour composition à base de ciment, telle qu'un béton, un mortier ou un ciment, comprenant des particules de sulfate de fer (II) heptahydraté sec , lesdites particules de sulfate de fer (II) heptahydraté sec ne comprenant pas plus de 20 %, de préférence pas plus de 10 %, avantageusement pas plus de 5 % en poids massique de particules ayant une taille granulométrique supérieure à 200 µm. Par particules de sulfate de fer (II) heptahydraté sec, au sens de la présente invention, on entend des particules de sulfate de fer (II) heptahydraté sec « nues », c'est-à-dire non enrobées par au moins une couche d'au moins un revêtement externe de type polymère, ou des particules de sulfate de fer (II) heptahydraté sec enrobées par au moins une couche d'au moins un revêtement externe de type polymère, par exemple des particules de sulfate de fer (II) heptahydraté sec enrobées par de la gélatine ou par de l'acide alginique ou un dérivé de ce dernier.

De préférence, on utilise des particules de sulfate de fer (II) heptahydraté sec « nues » (non enrobées).

Les particules de sulfate de fer (II) selon l'invention ne sont pas fixées sur un support ou mélangées à un dessicant. Par support ou dessicant, on entend par exemple la silice sous toutes ses formes ou des oxydes métalliques.

Par particules de sulfate de fer (II) sec, au sens de la présente invention, on entend des particules de sulfate de fer dépourvues d'eau, en dehors de l'eau liée chimiquement au sulfate de fer. L'eau non liée chimiquement au sulfate de fer est qualifiée d'eau libre. De préférence, les particules de sulfate de fer (II) sec selon l'invention ne contiennent pas plus de 0.5 % d'eau libre.

Selon un mode de réalisation particulièrement préféré, au moins 20 %, de préférence au moins 50 %, avantageusement au moins 75 % en poids massique des particules de sulfate de fer (II) heptahydraté sec ont une distribution granulométrique comprise entre 100 µm et 200 µm.

Il est théoriquement possible d'obtenir jusqu'à environ 99 % des particules de sulfate de fer (II) heptahydraté sec ayant une distribution granulométrique comprise entre 100 µm et 200 µm. D'une manière générale, au plus le pourcentage de particules de sulfate de fer (II) heptahydraté sec ayant une distribution granulométrique comprise entre 100 µm et 200 µm est élevé, au plus la quantité de sulfate de fer (II) heptahydraté sec à incorporer au ciment est faible, pour une résultat au moins équivalent.

Selon une variante, l'additif selon l'invention ne comprend pas de particules de sulfate de fer ayant une taille granulométrique supérieure à 200 µm.

La demanderesse a découvert, de manière inattendue, que les particules de sulfate de fer (II) sec, dans la distribution granulométrique précitée, avaient une meilleure efficacité dans le temps quant à la réduction du chrome (VI) soluble.

Avantageusement, l'additif est constitué par une poudre de sulfate de fer (II) heptahydraté sec (pour une durée de conservation minimum de la composition de deux mois).

Un autre objet de la présente invention concerne une composition à base de ciment, telle qu'un béton, un mortier ou un ciment, comprenant un additif selon l'invention.

De préférence, ladite composition est un ciment.

Selon un mode de réalisation particulièrement préféré, le ciment susvisé est un ciment Portland, un ciment composé, tout ciment défini à la norme EN 197, ou tout ciment défini dans les normes ASTM C-150 et C-595.

Avantageusement, cette composition contient un dosage en poids d'additif selon l'invention, tel que la quantité de sulfate de fer (II) heptahydraté sec introduite dans la composition est inférieure à 60 ppm de fer (II) par ppm de chrome (VI) soluble, pour une durée de conservation minimum de la composition de deux mois.

Selon un mode de réalisation préféré, la composition selon l'invention a une teneur en chrome (VI) inférieure ou égale à 2 ppm pendant une période de stockage d'une durée d'au moins deux mois, de préférence d'au moins neuf mois, ladite période de stockage pouvant aller jusqu'à douze mois.

Un autre objet de l'invention consiste en un procédé d'obtention de la composition précitée, ledit procédé comprenant une étape de mélange de particules de sulfates de fer (II) heptahydraté sec avec un ciment.

Un autre objet de l'invention concerne l'utilisation d'un additif selon l'invention pour préparer une composition à base de ciment, telle qu'un béton, un mortier ou un ciment.

La sélection de taille granulométrique peut être réalisée selon l'un ou l'autre des procédés connus pour contrôler la taille de particules : broyage/sélection, agglomération de fines particules ou recristallisation contrôlée.

La présente invention permet de surmonter les inconvénients de l'état de la technique, et plus particulièrement de diminuer de manière importante, par rapport aux techniques antérieures, la quantité de sulfate de fer qu'il est nécessaire d'incorporer dans un ciment afin de réduire le chrome (VI) soluble contenu dans ce ciment, et ce en incorporant dans le ciment une quantité seulement modérée d'un additif, tout en obtenant des résultats satisfaisants. La réduction de la quantité de sulfate de fer utilisée permet des gains économiques indéniables et permet d'éviter, comme mentionné précédemment, les possibles risques liés à d'éventuelles modifications des propriétés d'usage du ciment ou des matériaux dérivés de celui-ci, tels que des bétons ou des mortiers.

L'invention fournit donc une solution d'amélioration de durabilité du sulfate de fer sur la réduction du chrome (VI) soluble dans un ciment, à la différence de l'état de la technique.

Selon une variante, du sulfate d'étain ou du sulfate de manganèse, ou un mélange d'au moins deux composés sélectionnés dans le groupe constitué par le sulfate de fer (II) heptahydraté sec, le sulfate d'étain et le sulfate de manganèse sont utilisés à la place du sulfate de fer (II), étant donné que ces composés possèdent des propriétés similaires de réduction du chrome (VI) et présentent une relative instabilité quand ils sont ajoutés au ciment.

Selon la présente invention le sulfate de fer (II) est sous forme heptahydratée sèche (FeSO4, 7 H2O). En effet, cette forme heptahydratée sèche des particules de sulfate de fer (II), en combinaison avec la distribution granulométrique spécifique selon la présente invention, résulte, de manière surprenante, en une excellente stabilité des particules de sulfate, et en particulier des ions Fe2+ (en mélange avec une composition à base de ciment) qui peuvent assurer la réduction des ions Cr6+ sur une période de temps plus importante, tout en utilisant des quantités de sulfate de fer (II) heptahydraté sec moins importantes. A titre d'exemple, la demanderesse a découvert, de manière inattendue, que la forme monohydratée (FeSO4, 1 H2O) ne permettait pas de maintenir la quantité de chrome (VI) en deçà de 2 ppm alors que la forme heptahydratée sèche continuait à limiter cette quantité de chrome (VI) en dessous du seuil limite précité, à conditions de traitement équivalentes.

La composition à base de ciment selon l'invention est sensiblement stable durant une durée de stockage d'au moins deux mois, préférentiellement d'au moins neuf mois et pouvant aller jusqu'à douze mois dans les conditions usuelles de stockage du ciment, notamment en sac.

Par "sensiblement stable", on entend qu'il reste suffisamment d'ions Fe²⁺ disponibles pour réduire la quantité de chrome (VI) soluble à moins de 2 ppm.

L'additif de l'invention est utile comme additif pour les ciments. A titre de ciment, on peut utiliser tout type de ciment, notamment ciments Portland, ciments composés, tout ciment défini à la norme EN 197, ou tout ciment défini dans les normes ASTM C-150 et C-595.

On peut ajouter l'additif selon l'invention à tout moment de la fabrication du ciment. Cet additif peut être ajouté soit en entrée de séparateur dans le cas des broyeurs à circuit fermé, soit directement au produit fini. Cette dernière solution est préférée, dans la mesure où elle limite les actions d'attrition sur la surface des particules. L'additif peut aussi être ajouté dans les silos ou dans les citernes de transport, ou encore dans le béton ou le mortier final.

La quantité de particules de sulfate de fer (II) heptahydraté sec est relativement faible, en comparaison à la quantité de sulfate de fer qu'il était nécessaire d'utiliser auparavant pour compenser la perte d'efficacité dans le temps du sulfate de fer.

Les particules selon l'invention n'ont pas d'effet notable sur les conditions d'emploi du ciment, qui est donc utilisé de façon tout à fait classique.

Selon une alternative à la présente invention, il est possible d'utiliser un additif pour composition à base de ciment, telle qu'un béton, un mortier ou un ciment, comprenant des particules de sulfate de fer (II) heptahydraté sec enrobées par de la gélatine ou par de l'acide alginique (ou l'un de ses dérivés), dans lequel au moins 20 %, de préférence au moins 50 %, avantageusement au moins 75 % en poids massique des particules de sulfate de fer (II) heptahydraté sec enrobées ont une distribution granulométrique comprise entre 100 µm et 200 µm.

### Synthèse de l'additif selon l'invention

L'additif est obtenu selon l'un des trois procédés suivants :
- broyage/sélection à une taille granulométrique inférieure à environ 200 µm d'un sulfate de fer heptahydraté commercialisé pour l'application cimentière
- broyage/sélection à une taille granulométrique comprise entre environ 100 µm et environ 200 µm d'un sulfate de fer heptahydraté commercialisé pour l'application cimentière
- agglomération à l'aide d'un liant organique de particules fines (<100 µm) obtenues par broyage d'un sulfate de fer heptahydraté commercialisé pour l'application cimentière

### Exemples de l'efficacité de l'additif selon l'invention sur la réduction du chrome (VI) soluble d'un ciment

### Protocole d'incorporation dans le ciment de l'additif selon l'invention

On ajoute au ciment, selon les tests, différentes quantités de sulfate de fer (II) monohydraté ou heptahydraté sec en poudre, les échantillons de sulfate de fer (II) utilisés ayant différentes tailles de particules, aux fins de comparaison. Les comparaisons entre diverses formes de sulfates de fer sont toujours faites à quantités identiques de fer (II) introduites par quantité de chrome (VI) soluble dans le ciment.

Un ciment incorporant l'additif selon l'invention est préparé en mélangeant cet additif au ciment et homogénéisant par un passage de 45 minutes du mélange au sein d'un mélangeur commercialisé sous la marque Turbula®.

La teneur en chrome (VI) soluble du ciment traité est dosée immédiatement ou après avoir soumis le ciment traité à un protocole de vieillissement accéléré décrit ci-après.

### Protocole de vieillissement accéléré : forte humidité

Ce test consiste à mettre, dans un bac, un lit de poudre de ciment contenant le sulfate de fer : la masse de ciment est d'environ 600 grammes et la hauteur du lit de matière 1 cm. Ce bac est ensuite placé dans une chambre maintenue à 20°C et à 100% d'humidité relative. Le bac reste 24 heures dans cette chambre, puis la mesure du chrome (VI) soluble est effectuée. On mesure à 1 jour.

Ce protocole de vieillissement accéléré constitue des conditions de conservation sévères (extrêmes) pour le ciment. Aussi, l'observation d'un "bon" comportement d'un ciment (en terme de faible teneur en chrome (VI)) dans les conditions de vieillissement accéléré signifie *a fortiori* que ledit ciment aura nécessairement également un bon comportement dans des conditions de conservation/stockage usuelles.

### Procédure de mesure du chrome (VI)

Le dosage du chrome (VI) est effectué selon le projet de norme PR NF EN 196-10 Mai 2005 "Méthodes d'essais des ciments - Partie 10: détermination de la teneur du ciment en chrome (VI) soluble dans l'eau".

### Produits testés dans les différents exemples décrits ci-après

Les différents sulfates de fer testés ont été préparés à base de différents produits commerciaux actuellement utilisés en cimenterie pour réduire le chrome (VI) soluble du ciment. Plus précisément, ces produits commerciaux ont été broyés et/ou tamisés afin d'obtenir les différentes gammes granulométriques d'intérêt.

Les produits suivants ont été testés :
- 3 sulfates de fer (II) heptahydratés secs (dénommés ci-après hepta A, hepta B et hepta C),
- 2 sulfates de fer (II) monohydratés (dénommés ci-après mono D et mono E),
- 1 sulfate de fer (II) heptahydraté sec obtenu à partir d'un mélange d'un sel vert et d'un dessicant (dénommé ci-après hepta F).

Le produit hepta A est commercialisé par la société Kemira Pigments oy, les produits hepta B, mono D et hepta F sont commercialisés par la société Ferro Duo GmbH et les produits hepta C et mono E par la société Kronos International Inc.

### Résultats expérimentaux de réduction du chrome (VI) soluble

### Exemple 1. Avantage d'une sélection granulométrique 0-200 µm

On utilise un ciment CEM 1 52.5N et contenant 9,5 ppm de Chrome (VI) soluble, auquel on ajoute 47 ppm de fer ferreux par ppm de Chrome (VI) soluble de deux sulfates de fer heptahydratés secs obtenus à partir de produits commerciaux, à différentes tailles granulométriques. Le ciment traité est soumis au protocole de vieillissement accéléré décrit ci dessus.

Les résultats sont présentés en annexe, au sein du tableau 1.

Les résultats du tableau 1 montrent que, même dans des conditions très défavorables après un test de vieillissement accéléré, l'utilisation de particules de sulfate de fer heptahydraté sec, de taille granulométrique substantiellement inférieure à 200 µm permet une réduction beaucoup plus efficace de la teneur en chrome (VI) soluble d'un ciment, que l'utilisation de particules de sulfate de fer heptahydraté sec de taille comprise entre 0 et 100 µm.

### Exemple 2. Avantage d'une sélection granulométrique 100 µm-200 µm

On utilise un ciment CEM I 52.5N contenant 9,5 ppm de Chrome (VI) soluble, auquel on ajoute 47 ppm de fer (II) par ppm de Chrome (VI) soluble de différents sulfate de fer heptahydratés secs obtenus à partir de produits commerciaux, à différentes tailles granulométriques. Le ciment traité est soumis au protocole de vieillissement accéléré présenté ci-dessus.

Les résultats sont présentés en annexe, au sein du tableau 2.

L'utilisation de particules de sulfate de fer heptahydraté sec, de taille granulométrique comprise entre 100 et 200 µm conduit systématiquement à des valeurs de chrome (VI) soluble, mesurées après un test de vieillissement accéléré, plus faibles que celles obtenues avec l'utilisation de particules de sulfate de fer heptahydraté sec de taille granulométrique inférieure à 200 µm, à quantités de fer ferreux introduites identiques.

### Exemple 3. Avantage d'une sélection granulométrique 100µm-200µm d'un sulfate de fer heptahydraté sec

On utilise un ciment CEM I 52.5N, contenant 15 ppm de Chrome (VI) soluble, auquel on ajoute différents sulfates de fer heptahydratés secs ou monohydratés obtenus à partir de produits commerciaux, à différentes tailles granulométriques. Les sulfates de fer (II) monohydratés sont obtenus à partir de procédés thermiques ou chimiques. Les différents sulfates de fer heptahydratés secs ou monohydratés sont ajoutés au ciment de manière à obtenir soit 45 ppm de sulfate de fer (II) par ppm de chrome (VI) soluble, soit 30 ppm de fer (II) par ppm de chrome (VI) soluble. Le ciment traité est soumis à un protocole de vieillissement accéléré.

Les résultats sont présentés en annexe, au sein du tableau 3.

Les résultats du tableau 3 montrent que l'avantage obtenu avec le sulfate de fer heptahydraté sec par une sélection granulométrique de taille de particules comprise entre 100µm et 200µm ne s'applique pas à du sulfate de fer monohydraté. De plus, le sulfate de fer heptahydraté sec de taille granulométrique comprise entre 100 µm et 200 µm est considérablement plus durable que le sulfate de fer monohydraté tel quel (mono E) à quantités identiques de fer (II) introduites par quantité de chrome (VI) soluble dans le ciment.

### Exemple 4. Avantage d'une sélection granulométrique 100µm-200µm d'un sulfate de fer heptahydraté sec

On utilise un ciment CEM I 52.5N, contenant 9,5 ppm de Chrome (VI) soluble, auquel on ajoute différents sulfates de fer heptahydratés secs ou monohydratés obtenus à partir de produits commerciaux, à différentes tailles granulométriques. Le ciment traité est soumis au protocole de vieillissement accéléré décrit ci-dessus.

Les résultats sont présentés en annexe, au sein du tableau 4.

Les résultats du tableau 4 montrent également, sur un ciment différent de l'exemple précédent, que l'avantage obtenu avec le sulfate de fer heptahydraté sec par une sélection granulométrique de taille de particules comprise entre 100 µm et 200 µm ne s'applique pas à du sulfate de fer monohydraté.

### Exemple 5. Avantage d'une sélection granulométrique 100µm-200µm d'un sulfate de fer heptahydraté sec et diminution du dosage

On utilise un ciment CEM I 52.5N, contenant 9,5 ppm de Chrome (VI) soluble, auquel on ajoute, à différents dosages, différents sulfates de fer heptahydratés secs obtenus à partir de produits commerciaux, de taille granulométrique comprise entre 100 et 200 µm. Le ciment traité est soumis au protocole de vieillissement accéléré décrit ci-dessus.

Les résultats sont présentés en annexe, au sein du tableau 5.

Les résultats du tableau 5 montrent que l'utilisation de particules de sulfate ferreux heptahydraté sec de taille granulométrique comprise entre 100 µm et 200 µm permet de réduire efficacement la teneur en chrome (VI) soluble d'un ciment, même en diminuant fortement les quantités de fer ferreux ajoutés par rapport aux doses communément utilisées en l'état de la technique variant entre 60 et 200 ppm de fer ferreux par ppm de chrome (VI) soluble.

### Exemple 6. Obtention d'une sélection granulométrique 100 µm - 200 µm d'un sulfate de fer heptahydraté sec avec des particules obtenues par agglomération de petites particules

On utilise un ciment CEM I 52.5N et contenant 9,5 ppm de Chrome (VI) soluble.

Les fractions granulométriques testées sont obtenues par agglomération de fines particules de sulfate de fer heptahydraté sec obtenues à partir du produit hepta A. Des particules de sulfate de fer heptahydraté sec présentant 80% (en masse) de particules inférieures à 100 µm sont introduites dans un lit fluidisé et une solution de CarboxyMéthylCellulose (CMC) à 1% est pulvérisée à un débit d'environ 10g/min de façon à introduire entre 0,2 et 0,3% de CMC dans le sulfate de fer heptahydraté sec. Pendant la fluidisation, la température du produit est maintenue à environ 35°C.

Les particules de sulfate de fer heptahydraté sec de taille sélectionnée entre 100 et 200 µm, obtenues par collage de petites particules, sont aussi efficaces que des monoparticules de sulfate de fer heptahydraté sec de même taille.

Les résultats sont présentés en annexe, au sein du tableau 6.

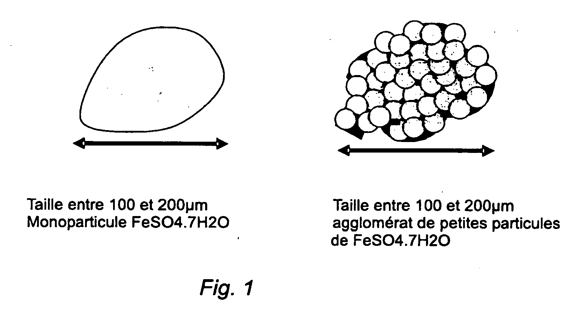

En résumé la taille 100-200 µm souhaitée pour une meilleure efficacité dans le temps du sulfate de fer heptahydraté sec sur la réduction du chrome (VI) soluble peut être atteinte par des mono particules de sulfate de fer (II) heptahydraté sec ou par l'agglomération de particules fines de sulfate de fer (II) heptahydraté sec, tel que représenté en figure 1.

### Exemple 7. Comparaison d'un sulfate de fer heptahydraté sec, obtenu à partir d'un mélange d'un sel vert et d'un dessicant, avec un sulfate de fer heptahydraté sec selon l'invention

On utilise un ciment CEM I 52.5N, contenant 9,5 ppm de Chrome (VI) soluble, auquel on ajoute, à différents dosages, un sulfate de fer heptahydraté sec obtenu selon la présente invention, ou un sulfate de fer heptahydraté sec du commerce, obtenu à partir d'un mélange d'un sel vert et d'un dessicant. Le ciment traité est soumis au protocole de vieillissement accéléré décrit ci-dessus.

Les résultats sont présentés en annexe, au sein du tableau 7.

Les résultats du tableau 7 montrent que l'utilisation de particules de sulfate de fer heptahydraté sec selon l'invention permet d'obtenir de meilleurs résultats qu'avec le sulfate de fer heptahydraté sec obtenu à partir d'un mélange d'un sel vert et d'un dessicant, notamment quand on diminue le dosage de l'additif. En effet, le maintien dans le temps de l'efficacité de réduction du Chrome (VI) du sulfate de fer est meilleur pour des faibles dosages quand on utilise le sulfate de fer selon l'invention. Par exemple, pour un dosage de 24 ppm de Fe2+ par ppm de Cr (VI) soluble, la quantité de Cr (VI) soluble après vieillissement est de 0,1 ppm pour l'adjuvant selon l'invention, alors qu'il est de 1,5 pour le sulfate de fer heptahydraté sec obtenu à partir d'un mélange d'un sel vert et d'un dessicant.

**Tableau 1**

| Sulfate de fer testé | taille des particules en µm | dosage de l'additif : 47 ppm Fe²⁺ par ppm de Cr (VI) soluble |
|---|---|---|
| | | ppm Cr (VI) soluble mesuré après protocole de vieillissement accéléré |
| particules de sulfate de fer (II) heptahydraté sec, obtenues à partir du produit hepta B | 0-100 | 2,6 |
| particules de sulfate de fer (II) heptahydraté sec, obtenues à partir du produit hepta B | 0-200 | 0,1 |
| particules de sulfate de fer (II) heptahydraté sec, obtenues à partir du produit hepta C | 0-100 | 2,9 |
| particules de sulfate de fer (II) heptahydraté sec, obtenues à partir du produit hepta C | 0-200 | 1,5 |

**Tableau 2**

| Sulfate de fer testé | taille desparticules en µm | dosage de l'additif : 47 ppm de Fe²⁺ par ppm de Cr (VI) soluble |
|---|---|---|
| | | ppm Cr (VI) soluble mesuré après protocole de vieillissement accéléré |
| particules de sulfate de fer (II) heptahydraté sec, obtenues à partir du produit hepta A | 0-200 | 3,2 |
| particules de sulfate de fer (II) heptahydraté sec, obtenues à partir du produit hepta A | 100-200 | 0,5 |
| particules de sulfate de fer (II) heptahydraté sec, obtenues à partir du produit hepta C | 0-200 | 1,5 |
| particules de sulfate de fer (II) heptahydraté sec, obtenues à partir du produit hepta C | 100-200 | 0,1 |

**Tableau 3**

| sulfate de fer testé | taille des particules en µm | dosage de l'additif en ppm Fe²⁺ par ppm de Cr (VI) soluble | |
|---|---|---|---|
| | | 45 | 30 |
| | | ppm Cr (VI) soluble mesuré après protocole de vieillissement accéléré | |
| particules de sulfate de fer (II) heptahydraté sec, obtenues à partir du produit hepta A | 100-200 | 0,2 | 0,4 |
| particules de sulfate de fer (II) heptahydraté sec, obtenues à partir du produit hepta B | 100-200 | 0,1 | Aucun résultat |
| particules de sulfate de fer (II) monohydraté, obtenues à partir du produit mono D | 100-200 | Aucun résultat | 6.7 |
| particules de sulfate de fer (II) monohydraté, obtenues à partir du produit mono E | 0-100 | 6,3 | Aucun résultat |

**Tableau 4**

| sulfate de fer testé | taille des particules en µm | dosage de l'additif : 47 ppm de Fe²⁺ par ppm de Cr (VI) soluble |
|---|---|---|
| | | ppm Cr (VI) soluble mesuré après protocole de vieillissement accéléré |
| particules de sulfate de fer (II) heptahydraté sec, obtenues à partir du produit hepta B | 100-200 | 0,1 |
| particules de sulfate de fer (II) heptahydraté sec, obtenues à partir du produit hepta C | 100-200 | 0,1 |
| particules de sulfate de fer (II) monohydraté, obtenues à partir du produit mono D | 100-200 | 4,3 |
| particules de sulfate de fer (II) monohydraté, obtenues à partir du produit mono E | 100-200 | 3,3 |

**Tableau 5**

| sulfate de fer testé | taille des particules en µm | dosage de l'additif en ppm Fe ²⁺ par ppm de Cr (VI) soluble | | | |
|---|---|---|---|---|---|
| | | 47 | 35 | 24 | 12 |
| | | ppm Cr (VI) soluble mesuré après protocole de vieillissement accéléré | | | |
| particules de sulfate de fer (II) heptahydraté sec, obtenues à partir du produit hepta A | 100-200 | 0,5 | 0,8 | 2 | Aucun résultat |
| particules de sulfate de fer (II) heptahydraté sec, obtenues à partir du produit hepta B | 100-200 | 0,1 | 0,1 | 0,1 | 1,9 |
| particules de sulfate de fer (II) heptahydraté sec, obtenues à partir du produit hepta C | 100-200 | 0,1 | 0,2 | 1,9 | Aucun résultat |

**Tableau 6**

| sulfate de fer testé : | taille des particules en µm | dosage de l'additif : 47 ppm de Fe²⁺ par ppm de Cr (VI) soluble |
|---|---|---|
| particules obtenues dans un lit fluidisé, par collage avec de la CMC de fines particules obtenues à partir d'un sulfate de fer (II) heptahydraté sec hepta A | 100-200 | ppm Cr (VI) soluble mesuré après protocole de vieillissement accéléré |
| essai n° 1 : | 100-200 | < 0,1 |
| essai n°2 | 100-200 | < 0,1 |

**Tableau 7**

| sulfate de fer testé | dosage de l'additif en ppm Fe²⁺ par ppm de Cr (VI) soluble | | | |
|---|---|---|---|---|
| | 47 | 35 | 24 | 12 |
| | ppm Cr (Vl) soluble mesuré après protocole de vieillissement accéléré | | | |
| particules de sulfate de fer (II) heptahydraté sec selon l'invention, obtenues à partir du produit hepta B | 0,1 | 0,1 | 0,1 | 1,9 |
| particules de sulfate de fer (II) heptahydraté sec obtenues à partir d'un mélange d'un sel vert et d'un dessicant (hepta F) | 0,1 | 0,4 | 1,5 | 2,9 |

## Revendications

1. Additif pour composition à base de ciment, telle qu'un béton, un mortier ou un ciment, comprenant des particules de sulfate de fer (II) heptahydraté sec, lesdites particules de sulfate de fer (II) heptahydraté sec :
- ne comprenant pas plus de 20 %, en poids massique de particules ayant une taille granulométrique supérieure à 200 µm,
- comprenant au moins 20 %, en poids massique de particules de sulfate de fer (II) heptahydraté sec ayant une distribution granulométrique comprise entre 100 µm et 200 µm, et
- n'étant pas fixées sur un support ou mélangées à un dessicant.

2. Additif selon la revendication 1, **caractérisé en ce que** les particules de sulfate de fer (II) heptahydraté sec ne comprennent pas plus de 10 %, avantageusement pas plus de 5 % en poids massique de particules ayant une taille granulométrique supérieure à 200 µm.

3. Additif selon la revendication 1 ou 2, **caractérisé en ce que** les particules de sulfate de fer (II) heptahydraté sec comprennent au moins 50 %, avantageusement au moins 75 % en poids massique de particules de sulfate de fer (II) heptahydraté sec ayant une distribution granulométrique comprise entre 100 µm et 200 µm.

4. Additif selon l'une quelconque des revendications 1 à 3, ledit additif étant constitué par une poudre de sulfate de fer (II) heptahydraté sec.

5. Composition à base de ciment, telle qu'un béton, un mortier ou un ciment, comprenant un additif selon l'une quelconque des revendications précédentes.

6. Composition selon la revendication précédente, ladite composition étant un ciment.

7. Composition selon la revendication précédente, ledit ciment étant un ciment Portland, un ciment composé, tout ciment défini à la norme EN 197, ou tout ciment défini dans les normes ASTM C-150 et C-595.

8. Composition selon l'une quelconque des revendications 5 à 7, ladite composition contenant un dosage en poids d'additif selon l'une quelconque des revendications 1 à 4, tel que la quantité de sulfate de fer (II) heptahydraté sec introduite dans la composition est inférieure à 60 ppm de fer (II) par ppm de chrome (VI) soluble, pour une durée de conservation minimum de la composition de deux mois.

9. Procédé d'obtention d'une composition selon l'une quelconque des revendications 5 à 8, ledit procédé comprenant une étape de mélange d'un additif selon l'une quelconque des revendications 1 à 4 avec un ciment.

10. Utilisation d'un additif selon l'une des revendications 1 à 4 pour préparer une composition à base de ciment, telle qu'un béton, un mortier ou un ciment.

## Claims

1. An additive for a cement-based composition, such as a concrete, a mortar or a cement, comprising particles of free flowing heptahydrate ferrous sulphate (II), the said particles of free flowing heptahydrate ferrous sulphate (II):
- not comprising more than 20 %, by mass of particles having a granulometric size greater than 200 µm,
- comprising at least 20 %, by mass of particles of free flowing heptahydrate ferrous sulphate (II) having a granulometric distribution comprised from 100 to 200 µm, and
- not being fixed on a support or mixed with a desiccant.

2. The additive according to claim 1, **characterised in that** the particles of free flowing heptahydrate ferrous sulphate (II) do not comprise more than 10 %, advantageously not more than 5 % by mass of particles having a granulometric size greater than 200 µm.

3. The additive according to claim 1 or claim 2, **characterised in that** the particles of free flowing heptahydrate ferrous sulphate (II) comprise at least 50 %, advantageously at least 75 % by mass of particles of free flowing heptahydrate ferrous sulphate (II) having a granulometric size comprised from 100 to 200 µm.

4. The additive according to any one of claims 1 to 3, wherein said additive is constituted of a powder of free flowing heptahydrate ferrous sulphate (II).

5. A cement-based composition, such as a concrete, a mortar or a cement, comprising an additive according to any one of the previous claims.

6. The composition according to the previous claim, wherein said composition is a cement.

7. The composition according to the previous claim, wherein the cement is a Portland cement, a blended cement, any cement defined by the EN 197 Standard, or any cement defined in the ASTM C-150 and C-595 Standards.

8. The composition according to any one of claims 5 to 7, containing a dosage by weight of additive according to any one of claims 1 to 4, such that the quantity of free flowing heptahydrate ferrous sulphate (II) introduced in the composition is less than 60 ppm of iron (II) per ppm of soluble chromium (VI), for a minimum conservation duration of the composition of two months.

9. A process to obtain a composition according to any one of claims 5 to 8, the said process comprising a step of mixing an additive according to any one of claims 1 to 4 with a cement.

10. The use of an additive according to any one of claims 1 to 4 to prepare a cement-based composition, such as a concrete, a mortar or a cement.

## Patentansprüche

1. Additiv für eine Zusammensetzung auf Zementbasis, wie z.B. ein Beton, ein Mörtel oder ein Zement, das Partikel aus trockenem Eisen(II)-sulfat-Heptahydrat umfasst, wobei die Partikel aus trockenem Eisen(II)-sulfat-Heptahydrat:
- nicht mehr als 20 Gew.-% Partikel, die eine granulometrische Größe von größer als 200 µm haben, umfassen;
- wenigstens 20 Gew.-% Partikel aus trockenem Eisen(II)-sulfat-Heptahydrat, die eine granulometrische Verteilung von zwischen 100 µm und 200 µm haben, umfassen und
- nicht an einen Träger fixiert sind oder mit einem Sikkativ vermischt sind.

2. Additiv nach Anspruch 1, **dadurch gekennzeichnet, dass** die Partikel aus trockenem Eisen(II)-sulfat-Heptahydrat nicht mehr als 10 Gew.-%, vorzugsweise nicht mehr als 5 Gew.-%, Partikel, die eine granulometrische Größe von größer als 200 µm haben, umfassen.

3. Additiv nach Anspruch 1 oder 2, **dadurch gekennzeichnet, dass** die Partikel aus trockenem Eisen(II)-sulfat-Heptahydrat wenigstens 50 Gew.-%, vorzugsweise wenigstens 75 Gew.-%, Partikel aus trockenem Eisen(II)-sulfat-Heptahydrat, die eine granulometrische Verteilung von zwischen 100 µm und 200 µm haben, umfassen.

4. Additiv nach einem der Ansprüche 1 bis 3, wobei das Additiv aus einem Pulver aus trockenem Eisen(II)-sulfat-Heptahydrat zusammengesetzt ist.

5. Zusammensetzung auf Zementbasis, wie z.B. ein Beton, ein Mörtel oder ein Zement, die ein Additiv nach einem der vorangehenden Ansprüche umfasst.

6. Zusammensetzung nach dem vorangehenden Anspruch, wobei die Zusammensetzung ein Zement ist.

7. Zusammensetzung nach dem vorangehenden Anspruch, wobei der Zement ein Portland-Zement, ein Zementverbundstoff, jeder Zement, der durch die Norm EN 197 definiert ist, oder jeder Zement, der durch die Normen ASTM C-150 und C-595 definiert ist, ist.

8. Zusammensetzung nach einem der Ansprüche 5 bis 7, wobei die Zusammensetzung einen Gewichtszusatz an Additiv nach einem der Ansprüche 1 bis 4 enthält, so dass die in die Zusammensetzung eingeführte Menge an trockenem Eisen(II)-sulfat-Heptahydrat unter 60 ppm Eisen(II) pro ppm löslichem Chrom(VI) ist, für eine Mindesthaltbarkeitsdauer der Zusammensetzung von zwei Monaten.

9. Verfahren zur Herstellung einer Zusammensetzung nach einem der Ansprüche 5 bis 8, wobei das Verfahren einen Schritt des Vermischens eines Additivs nach einem der Ansprüche 1 bis 4 mit einem Zement umfasst.

10. Verwendung eines Additivs nach einem der Ansprüche 1 bis 4, um eine Zusammensetzung auf Zementbasis, wie z.B. einen Beton, einen Mörtel oder einen Zement, herzustellen.
